# EUROPEAN PATENT SPECIFICATION

(11) **EP 3 247 877 B1**
(45) Date of publication and mention of the grant of the patent: **21.12.2022**
(21) Application number: 16700702.0
(22) Date of filing: 13.01.2016
(51) Int. Cl.: E21B 47/008, H01R 13/523

(54) **SUBSEA UMBILICAL TERMINATION ASSEMBLY**
UNTERWASSERVERSORGUNGSKABELABSCHLUSSANORDNUNG
ENSEMBLE TERMINAISON D'OMBILICAL SOUS-MARIN

(30) Priority: 19.01.2015 NO 20150092
(43) Date of publication of application: 29.11.2017
(73) Proprietor: Vetco Gray Scandinavia AS, 1338 Sandvika (NO)
(72) Inventor: HESTETUN, Steinar, Lindemann, 1396 Billingstad (NO); FLEISCHER, Hans-Peter, 3023 Sandvika (NO)
(74) Representative: Novagraaf Group
(86) International application number: PCT/EP2016/050529
(87) International publication number: WO 2016/116333

(56) References cited:
- WO-A1-2009/145906
- WO-A1-2010/019290
- GB-A- 2 471 091
- GB-A- 2 494 180

## Description

### FIELD OF THE INVENTION AND PRIOR ART

The present invention relates to a subsea umbilical termination assembly according to the preamble of claim 1.

A subsea installation for processing and transport of oil and gas usually comprises subsea well equipment installed at the seabed and connected to a surface structure, for instance in the form of a surface vessel or platform, by means of a subsea umbilical. The subsea umbilical may be used to supply hydraulic fluid and/or electric power to the subsea well equipment and/or deliver different types of production chemicals and service fluids to the subsea well equipment and/or transmit different types of electrical and/or optical signals between the surface structure and the subsea well equipment. The subsea umbilical may comprise several fluid lines, electrical cables and/or optical cables. The fluid lines and cables of the subsea umbilical are bundled together and enclosed within an outer protective sheathing. At the seabed, the subsea umbilical ends in an umbilical termination head, which is permanently fixed to the end of the subsea umbilical before the subsea umbilical is delivered for installation. During the installation, the subsea umbilical and the umbilical termination head are normally lowered into the sea from a surface vessel with the umbilical termination head connected to an electrical and/or optical distribution unit, which is normally located in line with the umbilical termination head.

GB2494180 A is concerned with a connector arrangement for a Pipe-in-Pipe pipeline. WO 2010/019290 A1 is concerned with an umbilical field connect.

### SUMMARY OF THE INVENTION

The object of the present invention is to provide a subsea umbilical termination assembly of new and favourable design.

According to the invention, this object is achieved by a subsea umbilical termination assembly having the features defined in claim 1.

The subsea umbilical termination assembly of the present invention comprises:
an umbilical termination head fixed to the end of a subsea umbilical; and
an electrical and/or optical distribution unit comprising a base frame and several connectors mounted to the base frame, wherein each connector is electrically connected to an electrical cable of the subsea umbilical via the umbilical termination head or optically connected to an optical cable of the subsea umbilical via the umbilical termination head.

According to the invention, the umbilical termination head is mounted in a space provided inside the base frame of the distribution unit. Hereby, the umbilical termination head and the distribution unit may be integrated with each other in a space-saving manner and the length of the subsea umbilical termination assembly may thereby be reduced.

Further advantages as well as advantageous features of the subsea umbilical termination assembly of the present invention will appear from the following description and the dependent claims.

### BRIEF DESCRIPTION OF THE DRAWINGS

With reference to the appended drawings, a specific description of preferred embodiments of the invention cited as examples follows below. In the drawings:
Fig 1 is a perspective view from a front end of a subsea umbilical termination assembly according to an embodiment of the present invention,
Fig 2 is a perspective view from a rear end of the subsea umbilical termination assembly of Fig 1,
Fig 3 is a lateral view of the subsea umbilical termination assembly of Fig 1,
Fig 4 is a planar view from above of the subsea umbilical termination assembly of Fig 1,
Fig 5 is a perspective view of the rear part of the subsea umbilical termination assembly of Fig 1,
Fig 6 is an exploded view of the part shown in Fig 5, and
Fig 7 is a partly cut top view of the part shown in Fig 5.

### DETAILED DESCRIPTION OF PREFERRED EMBODIMENTS OF THE INVENTION

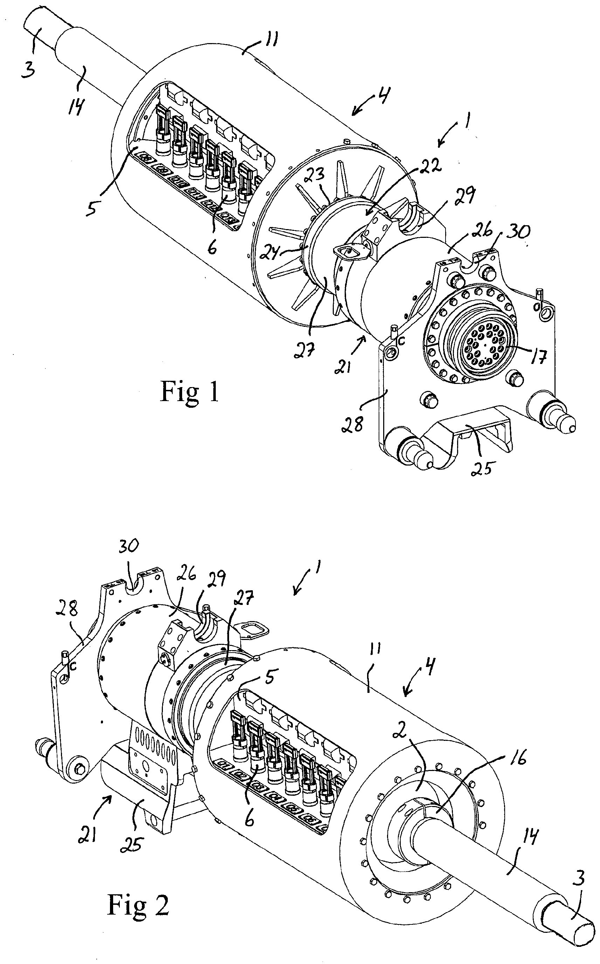

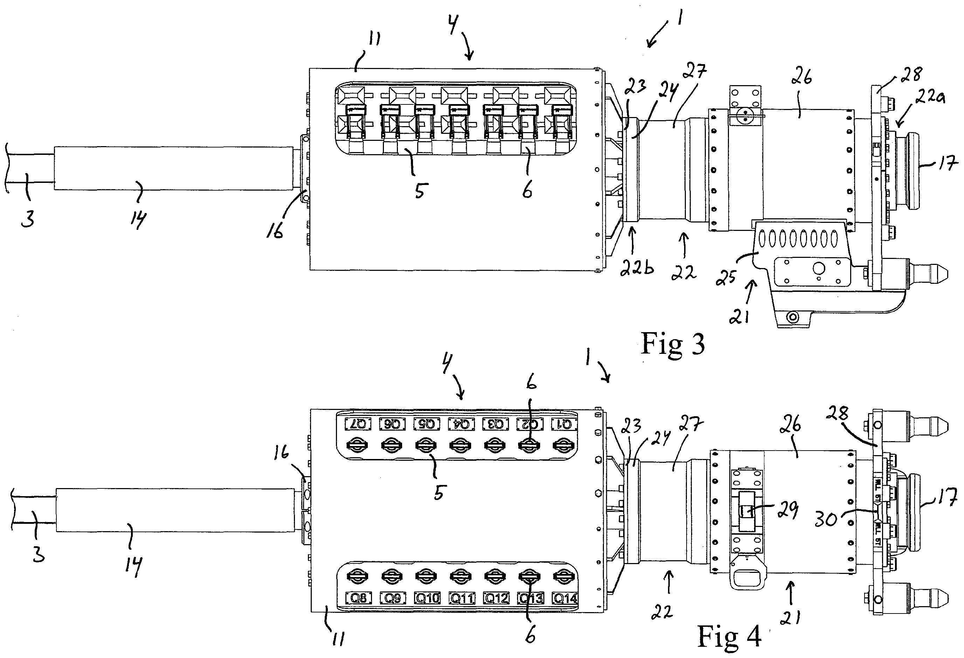

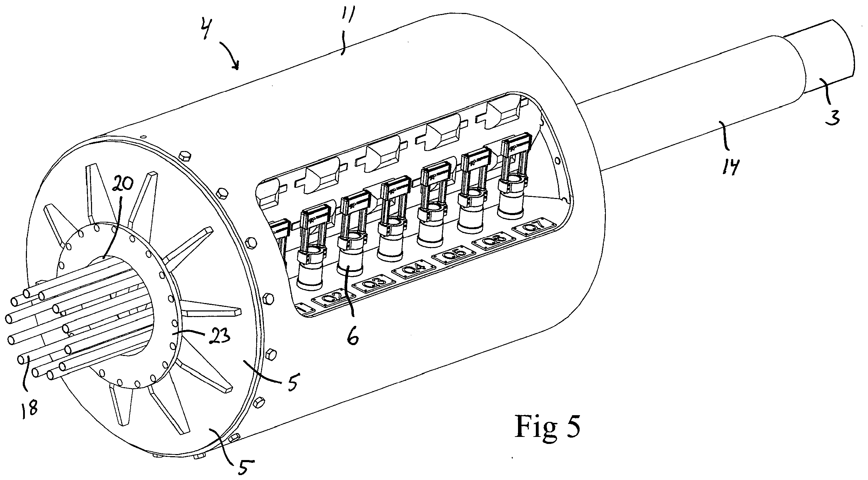

A subsea umbilical termination assembly 1 according to an embodiment of the present invention is illustrated in Figs 1-7. The subsea umbilical termination assembly 1 comprises an umbilical termination head 2 which is fixed to an end of a subsea umbilical 3. The subsea umbilical 3 comprises several fluid lines (not shown) and electrical and/or optical cables (not shown) which are bundled together inside the umbilical. The bundle of fluid lines and cables is enclosed within an outer protective sheathing.

The fluid lines of the subsea umbilical 3 may be used for supplying hydraulic fluid or delivering different types of production chemicals and service fluids to subsea well equipment. The electrical cables of the subsea umbilical 3 may be used for supplying electric power to subsea well equipment or transmitting electrical signals between a surface structure and subsea well equipment. The optical cables of the subsea umbilical 3 may be used for transmitting optical signals between a surface structure and subsea well equipment.

The subsea umbilical 3 terminates in the umbilical termination head 2, where the fluid lines and cables of the umbilical 3 are separated from each other in a conventional manner.

The subsea umbilical termination assembly 1 also comprises an electrical and/or optical distribution unit 4. The distribution unit 4 comprises a base frame 5 and several electrical and/or optical connectors 6 mounted to the base frame 5. Each electrical connector 6 of the distribution unit 4 is electrically connected to an electrical cable of the subsea umbilical 3 via the umbilical termination head 2 and each optical connector of the distribution unit 4 is optically connected to an optical cable of the subsea umbilical 3 via the umbilical termination head 2. The connectors 6 are in a conventional manner configured for engagement with electrical or optical flying leads (not shown), by means of which the distribution unit 4 is connected to the desired subsea well equipment.

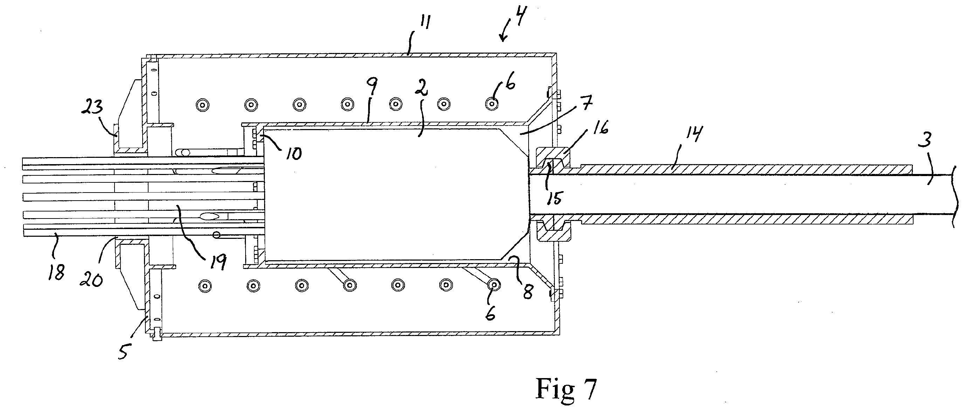

The umbilical termination head 2 is mounted in a space 7 (see Fig 7) provided inside the base frame 5 of the distribution unit 4. The umbilical termination head 2 is preferably centrally positioned inside the base frame 5. In the illustrated embodiment, the umbilical termination head 2 is circularly cylindrical and accommodated in a correspondingly shaped cavity 8 in the base frame 5, wherein the base frame 5 comprises an inner cylindrical wall 9 which delimits said cavity 8 in the radial direction and surrounds the umbilical termination head 2. In the example illustrated in Fig 7, the umbilical termination head 2 is bolted to an annular flange 10 of the base frame 5 provided at the inner end of the cavity 8. However, the umbilical termination head 2 may of course be fixed to the base frame 5 in any other suitable manner.

The base frame 5 of the distribution unit 4 is surrounded by a cylindrical outer casing 11, which preferably has a circular cross-sectional shape.

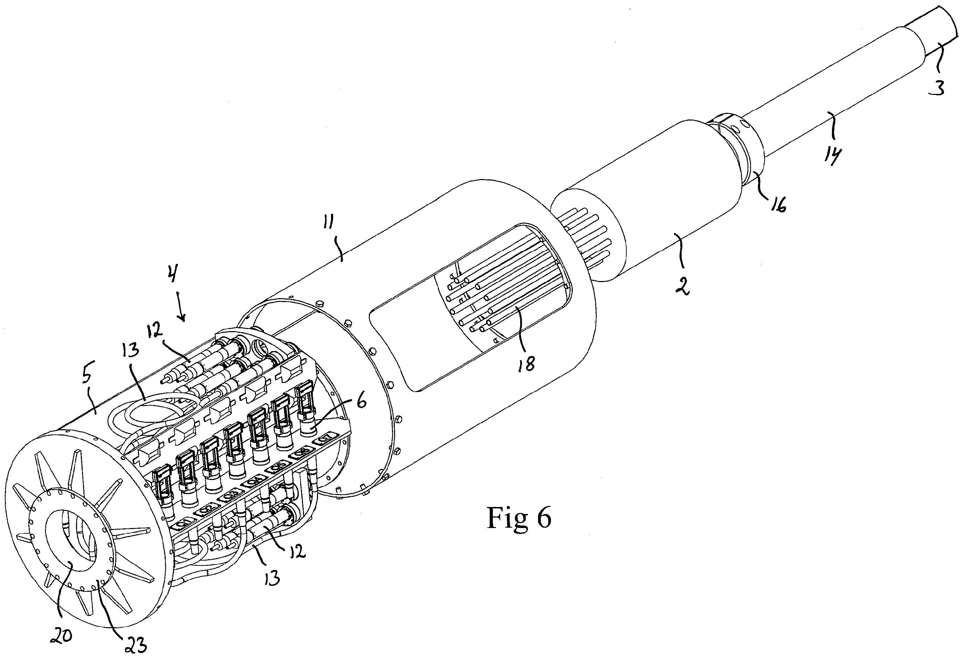

At least some of the connectors 6 are located in a space of the distribution unit 4 radially outwardly of the umbilical termination head 2. In the illustrated embodiment, the distribution unit 4 comprises several electrical terminations 12 (see Fig 6) mounted to the base frame 5, wherein each electrical termination 12 is electrically connected to an electrical cable of the subsea umbilical 3 via the umbilical termination head 2 and to one of said connectors 6. The electrical terminations 12 are with advantage located in a space of the distribution unit 4 radially outwardly of the umbilical termination head 2. For the sake of clarity, some of the electrical cables 13 between the umbilical termination head 2 and the electrical terminations 12 and between the electrical terminations 12 and the connectors 6 are omitted in Fig 6.

An end section of the subsea umbilical 3 may be surrounded by a bend restricting element 14 which extends along the end section and is fixed to a flange 15 (see Fig 7) at the rear end of the umbilical termination head 2, for instance by means of a clamping device 16. The bend restricting element 14 is configured to reduce the flexibility of the end section of the subsea umbilical 3.

The subsea umbilical termination assembly 1 comprises a multibore hub 17 and several fluid conduits 18 extending between the umbilical termination head 2 and the multibore hub 17, wherein each fluid conduit 18 is in fluid communication with a fluid line of the subsea umbilical 3. The fluid conduits 18 extend through an axial passage 19 (see Fig 7) in the base frame 5 of the distribution unit 4 and through an opening 20 at the front end of the base frame 5.

In the illustrated embodiment, the subsea umbilical termination assembly 1 also comprises a base structure 21 and a sliding unit 22 slidably mounted to the base structure 21. The base frame 5 of the distribution unit 4 is fixed to the sliding unit 22 at the rear end 22b thereof. In the illustrated example, the base frame 5 is provided with an annular mounting flange 23 at its front end, and this mounting flange 23 is bolted to a corresponding flange 24 at the rear end 22b of the sliding unit 22 to thereby secure the base frame 5 to the sliding unit 22. The above-mentioned fluid conduits 18 extend axially through the sliding unit 22.

The multibore hub 17 is fixed to the sliding unit 22 at the front end 22a thereof so as to be axially moveable in relation to the base structure 21 together with the sliding unit 22. The multibore hub 17 is configured for engagement with a corresponding hub (not shown) of a subsea appliance. The subsea umbilical termination assembly 1 also comprises an actuating unit (not shown), which is configured to act between the base structure 21 and the sliding unit 22 and by means of which the sliding unit 22 can be pushed axially forwards in relation to the base structure 21.

In the illustrated embodiment, the base structure 21 of the subsea umbilical termination assembly 1 comprises a lower base frame 25 and a support sleeve 26 mounted to the base frame 25, whereas the sliding unit 22 comprises a tubular body 27 and a vertical holding plate 28 rigidly mounted to the tubular body 27 at the front end thereof. The tubular body 27 is displaceably received in said support sleeve 26. The tubular body 27 extends through the support sleeve 26 and is axially displaceable in relation to the support sleeve 26 by means of the above-mentioned actuating unit.

The above-mentioned actuating unit may comprises a stroking device in the form of a hydraulic cylinder (not shown) configured to act between the support sleeve 26 and the tubular body 27 in the manner illustrated in US 2014/0103636 A1.

The hydraulic cylinder comprises a cylinder part, a piston displaceably received inside the cylinder part and a piston rod fixed to the piston. The base structure 21 comprises a first holder 29 to which the cylinder part is attachable, whereas the sliding unit 22 comprises a second holder 30 to which the piston rod is attachable. In the illustrated example, the first holder 29 is mounted to the support sleeve 26, whereas the second holder 30 forms part of the holding plate 28 provided at the front end of the tubular body 27.

The base structure 21 of the subsea umbilical termination assembly 1 is connectable to a landing platform (not shown) of a subsea support structure by being lowered downwards onto said landing platform so as to come to bear against it. The base structure 21 of the subsea umbilical termination assembly 1 is provided with guiding means configured to cooperate with corresponding guiding means on the subsea support structure so as to guide the base structure 21 into a correct position in relation to the landing platform of the subsea support structure when the subsea umbilical termination assembly 1 is lowered downwards into contact with the landing platform. These guiding means may for instance be of the types disclosed in closer detail in US 2014/0103636 A1. The subsea umbilical termination assembly 1 is intended to be lowered into the sea, e.g. from a surface vessel, barge or platform, while hanging in a crane hook of a hoisting device through lifting wires (not shown) attached to the subsea umbilical termination assembly 1.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A subsea umbilical termination assembly (1) comprising:
an umbilical termination head (2) fixed to the end of a subsea umbilical (3); and
an electrical and/or optical distribution unit (4) comprising a base frame (5) and several connectors (6) mounted to the base frame (5), wherein each connector (6) is electrically connected to an electrical cable of the subsea umbilical (3) via the umbilical termination head (2) or optically connected to an optical cable of the subsea umbilical (3) via the umbilical termination head (2),
**characterized in that** the umbilical termination head (2) is circularly cylindrical and is mounted in a correspondingly shaped cavity (8) provided inside the base frame (5) of the distribution unit (4) such that the umbilical termination head (2) is centrally positioned inside the base frame (5) of the distribution unit (4) and the connectors (6) are located in a space of the distribution unit (4) radially outwardly of the umbilical termination head (2).

2. A subsea umbilical termination assembly according to claim 1, **characterized in that** the distribution unit (4) comprises a cylindrical outer casing (11) which accommodates the base frame (5) of the distribution unit (4) and the umbilical termination head (2).

3. A subsea umbilical termination assembly according to claim 2, **characterized in that** said casing (11) has a circular cross-sectional shape.

4. A subsea umbilical termination assembly according to any of claims 1-3, **characterized in that** the base frame (5) of the distribution unit (4) comprises an inner cylindrical wall (9) which surrounds the umbilical termination head (2).

5. A subsea umbilical termination assembly according to any of claims 1-4, **characterized in that** the distribution unit (4) comprises several electrical terminations (12) mounted to the base frame (5), wherein each electrical termination (12) is electrically connected to an electrical cable of the subsea umbilical (3) via the umbilical termination head (2) and to one of said connectors (6).

6. A subsea umbilical termination assembly according to claim 5, **characterized in that** the electrical terminations (12) are located in a space of the distribution unit (4) radially outwardly of the umbilical termination head (2).

7. A subsea umbilical termination assembly according to any of claims 1-6, **characterized in that** the subsea umbilical termination assembly (1) comprises a multibore hub (17) and several fluid conduits (18) extending between the umbilical termination head (2) and the multibore hub (17), wherein each fluid conduit (18) is in fluid communication with a fluid line of the subsea umbilical (3).

8. A subsea umbilical termination assembly according to claim 7, **characterized in that** said fluid conduits (18) extend through an axial passage (19) in the base frame (5) of the distribution unit (4).

9. A subsea umbilical termination assembly according to claim 7 or 8, **characterized in:**
**that** the subsea umbilical termination assembly (1) comprises a base structure (21) and a sliding unit (22) slidably mounted to the base structure (21), the sliding unit (22) having a front end (22a) and an opposite rear end (22b);
**that** the base frame (5) of the distribution unit (4) is fixed to the sliding unit (22) at the rear end (22b) thereof and the multibore hub (17) is fixed to the sliding unit (22) at the front end (22a) thereof; and
**that** said fluid conduits (18) extend axially through the sliding unit (22).

## Patentansprüche

1. Unterwasserversorgungskabelabschlussanordnung (1), umfassend:
einen Versorgungskabelabschlusskopf (2), der an dem Ende eines Unterwasserversorgungskabels (3) befestigt ist; und
eine elektrische und/oder optische Verteilungseinheit (4), umfassend einen Grundrahmen (5) und mehrere Verbinder (6), die an dem Grundrahmen (5) montiert sind, wobei jeder Verbinder (6) mit einem elektrischen Kabel des Unterwasserversorgungskabels (3) über den Versorgungskabelabschlusskopf (2) elektrisch verbunden ist oder mit einem optischen Kabel des Unterwasserversorgungskabels (3) über den Versorgungskabelabschlusskopf (2) optisch verbunden ist,
**dadurch gekennzeichnet, dass** der Versorgungskabelabschlusskopf (2) kreiszylindrisch ist und in einem entsprechend geformten Hohlraum (8), der innerhalb des Grundrahmens (5) der Verteilungseinheit (4) bereitgestellt wird, derart montiert ist, dass der Versorgungskabelabschlusskopf (2) innerhalb des Grundrahmens (5) der Verteilungseinheit (4) zentral positioniert ist und die Verbinder (6) in einem Raum der Verteilungseinheit (4) radial äußerlich des Versorgungskabelabschlusskopfes (2) gelegen sind.

2. Unterwasserversorgungskabelabschlussanordnung nach Anspruch 1, **dadurch gekennzeichnet, dass** die Verteilungseinheit (4) ein zylindrisches Außengehäuse (11), das den Grundrahmen (5) der Verteilungseinheit (4) und den Versorgungskabelabschlusskopf (2) aufnimmt, umfasst.

3. Unterwasserversorgungskabelabschlussanordnung nach Anspruch 2, **dadurch gekennzeichnet, dass** das Gehäuse (11) eine Kreisquerschnittsform aufweist.

4. Unterwasserversorgungskabelabschlussanordnung nach einem der Ansprüche 1 bis 3, **dadurch gekennzeichnet, dass** der Grundrahmen (5) der Verteilungseinheit (4) eine innere zylindrische Wand (9), die den Versorgungskabelabschlusskopf (2) umgibt, umfasst.

5. Unterwasserversorgungskabelabschlussanordnung nach einem der Ansprüche 1 bis 4, **dadurch gekennzeichnet, dass** die Verteilungseinheit (4) mehrere elektrische Abschlüsse (12), die an dem Grundrahmen (5) montiert sind, umfasst, wobei jeder elektrische Abschluss (12) mit einem elektrischen Kabel des Unterwasserversorgungskabels (3) über den Versorgungskabelabschlusskopf (2) und mit einem der Verbinder (6) elektrisch verbunden ist.

6. Unterwasserversorgungskabelabschlussanordnung nach Anspruch 5, **dadurch gekennzeichnet, dass** die elektrischen Abschlüsse (12) in einem Raum der Verteilungseinheit (4) radial äußerlich des Versorgungskabelabschlusskopfes (2) gelegen sind.

7. Unterwasserversorgungskabelabschlussanordnung nach einem der Ansprüche 1 bis 6, **dadurch gekennzeichnet, dass** die Unterwasserversorgungskabelabschlussanordnung (1) eine Mehrfachbohrungsnabe (17) und mehrere Fluidleitungen (18), die sich zwischen dem Versorgungskabelabschlusskopf (2) und der Mehrfachbohrungsnabe (17) erstrecken, umfasst, wobei jede Fluidleitung (18) in Fluidkommunikation mit einer Fluidleitung des Unterwasserversorgungskabels (3) steht.

8. Unterwasserversorgungskabelabschlussanordnung nach Anspruch 7, **dadurch gekennzeichnet, dass** sich die Fluidleitungen (18) durch einen axialen Durchgang (19) in dem Grundrahmen (5) der Verteilungseinheit (4) erstrecken.

9. Unterwasserversorgungskabelabschlussanordnung nach Anspruch 7 oder 8, **dadurch gekennzeichnet:**
**dass** die Unterwasserversorgungskabelabschlussanordnung (1) eine Grundstruktur (21) und eine Gleiteinheit (22), die gleitbar an der Grundstruktur (21) montiert ist, umfasst, wobei die Gleiteinheit (22) ein vorderes Ende (22a) und ein gegenüberliegendes hinteres Ende (22b) aufweist;
**dass** der Grundrahmen (5) der Verteilungseinheit (4) an der Gleiteinheit (22) an dem hinteren Ende (22b) davon befestigt ist und die Mehrfachbohrungsnabe (17) an der Gleiteinheit (22) an dem vorderen Ende (22a) davon befestigt ist; und
**dass** sich die Fluidleitungen (18) durch die Gleiteinheit (22) axial erstrecken.

## Revendications

1. Ensemble terminaison (1) d'ombilical sous-marin comprenant :
une tête (2) de terminaison d'ombilical fixée au bout d'un ombilical sous-marin (3) ; et
une unité de distribution électrique et/ou optique (4) comprenant un cadre de base (5) et plusieurs connecteurs (6) montés sur le cadre de base (5), dans lequel chaque connecteur (6) est connecté électriquement à un câble électrique de l'ombilical sous-marin (3) par l'intermédiaire de la tête (2) de terminaison d'ombilical ou connecté optiquement à un câble optique de l'ombilical sous-marin (3) par l'intermédiaire de la tête (2) de terminaison d'ombilical,
**caractérisé en ce que** la tête (2) de terminaison d'ombilical est circulairement cylindrique et est montée dans une cavité (8) de forme correspondante ménagée à l'intérieur du cadre de base (5) de l'unité de distribution (4) de telle sorte que la tête (2) de terminaison d'ombilical soit positionnée de manière centrale à l'intérieur du cadre de base (5) de l'unité de distribution (4) et que les connecteurs (6) soient situés dans un espace de l'unité de distribution (4) radialement vers l'extérieur de la tête (2) de terminaison d'ombilical.

2. Ensemble terminaison d'ombilical sous-marin selon la revendication 1, **caractérisé en ce que** l'unité de distribution (4) comprend un boîtier externe cylindrique (11) qui reçoit le cadre de base (5) de l'unité de distribution (4) et la tête (2) de terminaison d'ombilical.

3. Ensemble terminaison d'ombilical sous-marin selon la revendication 2, **caractérisé en ce que** ledit boîtier (11) a une forme de section transversale circulaire.

4. Ensemble terminaison d'ombilical sous-marin selon l'une quelconque des revendications 1 à 3, **caractérisé en ce que** le cadre de base (5) de l'unité de distribution (4) comprend une paroi cylindrique interne (9) qui entoure la tête (2) de terminaison d'ombilical.

5. Ensemble terminaison d'ombilical sous-marin selon l'une quelconque des revendications 1 à 4, **caractérisé en ce que** l'unité de distribution (4) comprend plusieurs terminaisons électriques (12) montées sur le cadre de base (5), dans lequel chaque terminaison électrique (12) est connectée électriquement à un câble électrique de l'ombilical sous-marin (3) par l'intermédiaire de la tête (2) de terminaison d'ombilical et à l'un desdits connecteurs (6).

6. Ensemble terminaison d'ombilical sous-marin selon la revendication 5, **caractérisé en ce que** les terminaisons électriques (12) sont situées dans un espace de l'unité de distribution (4) radialement vers l'extérieur de la tête (2) de terminaison d'ombilical.

7. Ensemble terminaison d'ombilical sous-marin selon l'une quelconque des revendications 1 à 6, **caractérisé en ce que** l'ensemble terminaison d'ombilical sous-marin (1) comprend un moyeu à alésages multiples (17) et plusieurs conduits de fluide (18) s'étendant entre la tête (2) de terminaison d'ombilical et le moyeu à alésages multiples (17), dans lequel chaque conduit de fluide (18) est en communication fluidique avec une ligne de fluide de l'ombilical sous-marin (3).

8. Ensemble terminaison d'ombilical sous-marin selon la revendication 7, **caractérisé en ce que** lesdits conduits de fluide (18) s'étendent à travers un passage axial (19) dans le cadre de base (5) de l'unité de distribution (4).

9. Ensemble terminaison d'ombilical sous-marin selon la revendication 7 ou 8, **caractérisé :**
**en ce que** l'ensemble terminaison d'ombilical sous-marin (1) comprend une structure de base (21) et une unité coulissante (22) montée en coulissement sur la structure de base (21), l'unité coulissante (22) ayant une extrémité avant (22a) et une extrémité arrière (22b) opposée ;
**en ce que** le cadre de base (5) de l'unité de distribution (4) est fixé à l'unité coulissante (22) au niveau de l'extrémité arrière (22b) associée et le moyeu à alésages multiples (17) est fixé à l'unité coulissante (22) au niveau de l'extrémité avant (22a) associée ; et
**en ce que** lesdits conduits de fluide (18) s'étendent axialement à travers l'unité coulissante (22).
